# EUROPÄISCHE PATENTSCHRIFT

(11) **EP 3 325 684 B1**
(45) Veröffentlichungstag und Bekanntmachung des Hinweises auf die Patenterteilung: **04.03.2020**
(21) Anmeldenummer: 16741898.7
(22) Anmeldetag: 13.07.2016
(51) Int. Cl.: C22C 38/00, C21D 8/02, C23C 2/06, C22C 38/02, C22C 38/04, C22C 38/06, C22C 38/12, C22C 38/14, C23C 2/40, B32B 15/01, C21D 6/00, C23C 2/02, C21D 9/52, C22C 18/00, C22C 18/04

(54) **VERFAHREN ZUM HERSTELLEN EINES WARMBANDES AUS EINEM BAINITISCHEN MEHRPHASENSTAHL MIT EINER ZN-MG-AL-BESCHICHTUNG UND EIN ENTSPRECHENDES WARMBAND**
METHOD FOR MANUFACTURING A HOT-ROLLED BAINITIC MULTIPHASE STEEL SHEET HAVING A ZN-MG-AL-COATING AND A CORRESPONDING HOT-ROLLED STEEL SHEET
PROCÉDÉ DE FABRICATION DE TÔLE D'ACIER LAMINÉES À CHAUD AYANT BAINITIQUE MULTIPHASE AVEC UN ZN-MG-AL-REVETEMENT ET UNE TÔLE D'ACIER LAMINÉES À CHAUD CORRESPONDANT

(30) Priorität: 17.07.2015 DE 102015111683; 09.09.2015 DE 102015115155
(43) Veröffentlichungstag der Anmeldung: 30.05.2018
(73) Patentinhaber: Salzgitter Flachstahl GmbH, 38239 Salzgitter (DE)
(72) Erfinder: DENKS, Ingwer, 38302 Wolfenbüttel (DE); PELZ, Christian, 38302 Wolfenbüttel (DE); HABERMANN, Maik, 38835 Osterode (DE); BRAUN, Michael, 38165 Lehre (DE); MECKE, Stefan, 38159 Vechelde (DE); GEFFERT, Ansgar, 31249 Hohenhameln (DE); KÖPPER, Nils, 31177 Harsum (DE)
(74) Vertreter: Moser Götze & Partner Patentanwälte mbB
(86) Internationale Anmeldenummer: PCT/EP2016/066682
(87) Internationale Veröffentlichungsnummer: WO 2017/012958

(56) Entgegenhaltungen:
- EP-A1- 1 621 645
- EP-A1- 2 020 451
- EP-A1- 2 703 515
- JP-A- 2003 321 739

## Beschreibung

Die Erfindung betrifft ein Verfahren zur Herstellung eines Warmbandes aus einem bainitischen Mehrphasenstahl mit einer Zn-Mg-Al-Beschichtung, ein Warmband aus einem bainitischen Mehrphasenstahl mit einer Zn-Mg-Al-Beschichtung und eine Verwendung eines entsprechenden Warmbandes zur Herstellung von umgeformten, dynamisch hoch belastbaren und gegen korrosive und abrasive Einwirkungen widerstandfähigen Bauteilen, insbesondere Kraftfahrzeugteilen.

Aus der deutschen Patentanmeldung DE 10 2011 117 572 A1 ist ein Mehrphasenstahl mit Dual-, Bainit- oder Complexphasengefüge und ein Verfahren zur Herstellung eines aus diesem Mehrphasenstahl hergestellten kalt- oder warmgewalzten Stahlbandes bekannt. Dieses Stahlband wird anschließend mit einer Beschichtung aus Zink oder Zink-Magnesium schmelztauchbeschichtet. Das beschichtete Stahlband weist eine optimierte Kombination aus hoher Festigkeit, guter Verformbarkeit und gutem Korrosionsschutz auf und eignet sich besonders für einen Einsatz im Fahrzeugkarosseriebau. Der Mehrphasenstahl besteht aus den Elementen (Gehalte in Gewichtsprozent und bezogen auf die Stahlschmelze): C 0,060 bis <= 0,115, Al 0,020 bis <= 0,060, Si 0,100 bis <= 0,500, Mn 1,300 bis <= 2,500, P <= 0,025, S <= 0,0100, Cr 0,280 bis <= 0,480, Mo <= 0,150, Ti 0,005 bis <= 0,050, Nb 0,005 bis <= 0,050, B 0,0005 bis <= 0,0060, N <= 0,0100 sowie Rest Eisen, einschließlich üblicher stahlbegleitender zuvor nicht erwähnter Elemente. Ein aus diesem Mehrphasenstahl stranggegossenes Vorband wird zu einem Warmband warmgewalzt und anschließend durchlaufgeglüht. Versuche sollen gezeigt haben, dass die sich nach dem Durchlaufglühen eingestellten Gefügeanteile nach dem anschließendem Schmelztauchbeschichten bei Temperaturen von 420 bis 470 °C erhalten bleiben.

Des Weiteren ist aus der internationalen Patentanmeldung WO 2014/033153 A1 ein Verfahren zum Aufbringen eines auf Zink basierenden Schutzüberzuges auf ein Stahlflachprodukt und ein Stahlflachprodukt mit einem entsprechenden Schutzüberzug bekannt. Der Schutzüberzug ist ein Zn-Mg-Al-Schichtsystem, welches neben einem Korrosionsschutz auch eine homogene und glatte Oberfläche bietet.

Das Aufbringen des Schutzüberzuges erfolgt mittels Schmelztauchbeschichten in einem metallischem Bad, das nach folgendem Legierungskonzept zusammen gesetzt ist (jeweils in Gewichtsprozent). Der Aluminiumanteil ist größer als der Magnesiumanteil. Der Aluminiumanteil liegt im Bereich zwischen 1,8 Gew.-% und 3,0 Gew.-%. Der Magnesiumanteil liegt zwischen 1,3 Gew.-% und 2,7 Gew.-%. Das Verhältnis von Magnesiumanteil zur Summe des Aluminiumanteils und des Magnesiumanteils liegt im Bereich zwischen 0,31 Gew.-% und 0,44 Gew.-%. Der Rest der Legierung sind Zink und unvermeidbare Verunreinigungen, deren Summe deutlich kleiner als 1 Gew.-% ist. Hierbei soll ein Zusammenhang zwischen der Schmelze, deren Erstarrung am Flachprodukt sowie dem optischen Erscheinungsbild und der Qualität der erstarrten Oberfläche bestehen. Ziel soll sein, beim Erstarren der Schutzschicht ein ternäres Eutektikum der Metalle Zn, Mg und Al zu bilden. Bis zum Erreichen des ternären Eutektikums sollen nur primäre Zinkdendriten entstehen. Durch Schwankungen in den Legierungsgehalten der Schmelze kann es dazu kommen, dass vor dem Erreichen des ternären Eutektikums die magnesiumreiche oder aluminiumreiche Rinne getroffen werden, so dass neben der Zink-Primärausscheidung in einem geringen Maß binäre Ausscheidungen von MgZn₂ und Zn und/oder aluminiumreiche Zink-Phase stattfinden. Der Gehalt an binär ausgeschiedener Mg- oder Al-reicher Phase soll stets weniger als 10 Gewichtsprozent sein. Demnach soll ein quasi-einphasiger Erstarrungsweg erreicht werden. Derartige Schutzüberzüge sollen den Anforderungen im Automobilsektor entsprechen.

Aus der europäischen Patentanmeldung EP 2 020 451 A1 ist ein warmgewalztes Stahlband bekannt, das in Gew.-% enthält: 0,05≤C≤0,09; 1≤Mn≤2; 0,015≤Al≤0,05; 0,1≤Si≤0,3; 0,1≤Mo≤0,4; S≤0,01; P≤0,025; 0,003≤N≤0,009, 0,12≤V≤0,22, Ti≤0,005, Nb≤0,02 sowie optional Cr≤0,45 und eine vorwiegend bainitische Mikrostruktur aufweist. Auch wird ein Verfahren zur Herstellung eines solchen Stahlbandes beschrieben, wobei nach einem Vergießen des Stahls zu einem Vorprodukt dieses auf eine Temperatur oberhalb von 1150°C aufgeheizt wird und anschließend bei einer Temperatur zwischen 870°C und 930°C warmgewalzt wird. Nach einer schnellen Abkühlung wird das warmgewalzte Stahlband bei einer Temperatur zwischen 500 und 600°C aufgehaspelt, wobei die bainitische Umwandlung stattfindet. Im Anschluss kann das Stahlband unbeschichtet oder beschichtet verwendet werden. Bei Verwendung mit Beschichtung wird diese in Form einer Zink- oder Zink-basierten Legierung aufgebracht, indem das Stahlband zunächst auf 680 °C aufgeheizt und auf 455°C abgekühlt wird und so dann in einem kontinuierlichen Schmelztauchverfahren bei dieser Temperatur beschichtet wird.

Die europäische Patentanmeldung EP 1 621 645 A1 betrifft ein Stahlband mit einer Zinklegierungsbeschichtung, die mittels Schmelztauchverfahren aufgebracht wurde und 0,3 - 2,3 Gew.-% Magnesium, 0,6 - 2,3 Gew.-% Aluminium, < 0,2 Gew.-% eines oder mehrerer zusätzlicher Elemente, unvermeidbare Verunreinigungen sowie Rest Zink enthält. Als Vorteile werden eine günstigere Produktion, eine höhere Korrosionsbeständigkeit des beschichteten Stahlbandes und eine geringere Schlackebildung im Zinkbad genannt.

Die europäische Patentanmeldung EP 2 703 515 A1 beschreibt ein Verfahren zum Aufbringen einer Beschichtung auf ein Stahlflachprodukt mittels Schmelztauchverfahren in einem Zink-Legierungsschmelzbad, das eine Zusammensetzung von bevorzugt 2,0 bis 2,9 Gew.-% Al und 1,5 bis 2,4 Gew.-% Mg und Rest Zink aufweist. Der Aluminium-Anteil muss dabei größer als der MagnesiumAnteil sein und als ganz besonders vorteilhaft wird eine Zusammensetzung von 2,5 Gew.-% Al und 1,6 Gew.-% Mg genannt.

Die Japanische Offenlegungsschrift JP 2003 321739 A offenbart ein Verfahren zur Herstellung eines hochfesten, warmgewalzten Stahlbandes mit einer Gefügestruktur, die zwischen 5 und 70 Vol.-% Bainit enthält. Die Zusammensetzung des Stahlbandes enthält in Gew.-%: 0,03-0,1 C; ≤2,0 Si, 0,5-1,7 Mn; 0,1-0,5 Mo; <0,1 Al; ≤0,06 P; ≤ 0,01 S; 0,005-0,2 Nb; 0,015-0,15 V; 0,07-0,2 Ti sowie 0,01-0,1 W. Nach dem Vergießen der Stahlschmelze zu einer Bramme wird diese über eine Temperatur von 1200°C erwärmt und warmgewalzt bei Temperaturen oberhalb von 800°C. Nach einer Abkühlung auf 350 bis 575°C wird das Stahlband aufgewickelt. Eine Beschichtung wird nicht explizit erwähnt, für Zinküberzüge aber das Elektroplattieren als mögliche Beschichtungsweise vorgeschlagen

Ferner ist in der internationalen Patentanmeldung WO 2006/002843 A1 ein weiterer Schutzüberzug aus einer Zn-Mg-Al-Legierung beschrieben. Die Schmelze weist in Gewichtsprozent einen Aluminiumanteil im Bereich zwischen 0,6 Gew.-% und 2,3 Gew.-% auf. Der Magnesiumanteil liegt zwischen 0,3 Gew.-% und 2,3 Gew.-%. Ein Aluminiumanteil oberhalb von 2,3 Gew.-% soll die Schweißbarkeit verschlechtern. Ein Magnesiumanteil oberhalb von 2,3 Gew.-% soll die Oberfläche verschlechtern.

Hiervon ausgehend liegt der vorliegenden Erfindung die Aufgabe zu Grunde, ein weiteres Verfahren zur Herstellung eines Warmbandes aus einem bainitischen Mehrphasenstahl mit einer Zn-Mg-Al-Beschichtung und ein entsprechendes Warmband zu schaffen.

Diese Aufgabe wird durch ein Verfahren zur Herstellung eines Warmbandes aus einem bainitischen Mehrphasenstahl mit einer Zn-Mg-Al-Beschichtung mit den Merkmalen des Anspruchs 1 und ein Warmband aus einem bainitischen Mehrphasenstahl mit einer Zn-Mg-Al-Beschichtung mit den Merkmalen des Anspruches 6 gelöst. Vorteilhafte Ausgestaltungen der Erfindung sind in den Unteransprüchen angegeben.

Erfindungsgemäß wird ein weiteres Verfahren zur Herstellung eines Warmbandes aus einem bainitischen Mehrphasenstahl mit einer Zn-Mg-Al-Beschichtung, durch die Schritte:
- Erschmelzen einer Stahlschmelze bestehend aus (in Gewichtprozent): C: 0,04 - 0,11, Si: <= 0,7, Mn: 1,4 - 2,2, Mo <= 0,5, Al: 0,015 - 0,1, P: bis zu 0,02, S: bis zu 0,01, B bis zu 0,004, sowie mindestens ein Element aus der Gruppe Nb, V, Ti gemäß folgender Bedingung: 0,02 <= Nb + V + Ti <= 0,20, optional in Summe Ti- und Mo-Gehalt > 0,1 und Rest Eisen einschließlich unvermeidbarer erschmelzungsbedingter, stahlbegleitender Elemente,
- Vergießen der Stahlschmelze zu einem Vormaterial, insbesondere einer Bramme oder einem Block oder einer Dünnbramme,
- Warmwalzen des Vormaterials zu einem Warmband mit einer Endwalztemperatur im Bereich von 800 bis 950 °C,
- Abkühlen des Warmbandes auf eine Haspeltemperatur kleiner 650 °C,
- Aufhaspeln des Warmbandes bei einer Haspeltemperatur kleiner 650 °C,
- Abkühlen des aufgehaspelten Warmbandes auf Raumtemperatur an ruhender Luft, wobei das Gefüge des aufgehaspelten Warmbandes anschließend einen Bainit-Anteil größer als 50% aufweist,
- Erwärmen des Warmbandes auf eine Temperatur von größer als 650 °C und kleiner als Ac3, insbesondere kleiner als Ac1 + 50 °C,
- Abkühlen des Warmbandes auf Zinkbadtemperatur,
- Schmelztauchbeschichten des erwärmten Warmbandes in einem Zink-Legierungsschmelzbad enthaltend (in Gewichtsprozent) Al: 1,3 - 1,7, Mg: 1,0 - 1,2, Rest Zink und unvermeidbare Verunreinigungen erreicht. Das nach diesem Verfahren hergestellte beschichtete und bainitische Warmband zeichnet sich durch eine optimierte Kombination aus hoher Festigkeit, hervorragender Verformbarkeit, gutem Korrosionsschutz und guter Schweißeignung aus. Das bainitische Gefüge wird unter anderem dadurch erreicht, dass das Warmband nach dem Warmwalzen bei einer Temperatur unter 650 °C aufgehaspelt wird. Vorteilhaft erweist sich dabei die vorzügliche Umformbarkeit kombiniert mit der Beschichtung, die beim Umformen fest mit dem Material des Warmbandes verbunden bleibt. Hierdurch können auch komplexe Bauteilgeometrien erzeugt werden, ohne dass Einsätze, wie beispielsweise Lagerschalen oder Deckel, in die Konstruktion eingeschweißt werden müssen. Dadurch kann dieses Material bevorzugt im Bereich der Fahrwerksbauteile eingesetzt werden. In diesem Bereich ist das Material großen, stoßartig und mit hohen Amplituden auftretenden Belastungen ausgesetzt, die die Verwendung eines geschweißten Bauteils verbieten bzw. die bei der Festlegung geeigneter Schweißnahtausführungen zu konstruktiven Anpassungen führen müssen, die zu einem Mehrverbrauch an Material und damit zu einer unnötigen Gewichtserhöhung führen. Die Zn-Mg-Al-Beschichtung wird in einem Umformwerkzeug während der Kaltumformung, insbesondere aufgrund der hervorragenden Haftung der Beschichtung auf dem Warmband und der geringen Reibwerte der Beschichtung, kaum abgetragen, so dass es bei der Verarbeitung im Presswerk zu weniger Putzzeiten kommt.

Außerdem ist aufgrund der chemischen Zusammensetzung des Trägermaterials in Form des bainitischen Mehrphasenstahls und der Zn-Mg-Al-Beschichtung eine gute Schweißbarkeit gegeben. Daher kann dieses Material auch bei Bauteilen Einsatz finden, deren Konstruktion eine gute Schweißbarkeit und gute Umformbarkeit voraussetzt.

Die Zn-Mg-Al-Beschichtung bietet einen zur Tauchlackierung ergänzenden Korrosionsschutz am fertiggestellten Kraftfahrzeug. Vorteilhafter Weise ist die chemische Zusammensetzung des bainitischen Mehrphasenstahls so eingestellt, dass trotz des Erwärmens des Warmbandes auf eine Temperatur kleiner Ac3, insbesondere kleiner als Ac1 + 50 °C, die Eigenschaften, insbesondere das Gefüge, des Mehrphasenstahls erhalten bleiben. Die chemische Zusammensetzung ist so eingestellt, dass Verfestigungs- und Entfestigungsvorgänge im Wesentlichen die Ausgangsfestigkeit erhalten lassen oder leicht erhöhen. Die Haftung der Zn-Mg-Al-Beschichtung wird durch das Erwärmen auf eine Temperatur von größer als 650 °C positiv beeinflusst.

Neben dem nach dem Warmwalzen erzielten einen Bainit-Anteil von größer als 50% können vereinzelt noch Anteile anderer Phasen wie beispielsweise Martensit und/oder Ferrit enthalten sein.

Im Zusammenhang mit der vorliegenden Erfindung kann das Vormaterial mittels Stranggießen, Bandgießen oder Blockgießen hergestellt werden. Insbesondere werden als Vormaterial Brammen mit einer Dicke über 100 mm bis 450 mm eingesetzt.

Besonders energiesparend ist, dass das Erwärmen des Warmbandes bei einer Temperatur von größer als 650 °C und kleiner als Ac3, insbesondere kleiner als Ac1 + 50 °C, in einem Arbeitsschritt stattfindet und das Warmband unmittelbar nach dem Erwärmen und Abkühlen auf Zinkbadtemperatur schmelztauchbeschichtet wird. Ein erneutes Erwärmen wird somit vermieden. Durch das Erwärmen wird das Gefüge des Warmbandes von Bainit in geglühten Bainit überführt.

Vorzugsweise ist vorgesehen, dass das Warmband in einem Zink-Legierungsschmelzbad mit einer Badtemperatur von 405 bis 470 °C, evorzugt von 410 bis 430 °C, schmelztauchbeschichtet wird.

Vorteilhafter Weise ist vorgesehen, dass der zu erschmelzende Stahl einen C-Gehalt von 0,06 bis 0,10 Gewichtsprozent und einen Si-Gehalt von 0,05 bis 0,50 Gewichtsprozent aufweist, sowie zusätzlich die Elemente Nb, V und Ti, wobei die Summe der Gehalte Nb + V + Ti in einem Bereich von 0,05 bis 0,20 Gewichtsprozent liegt.

Bevorzugt weist der zu erschmelzende Stahl bezogen auf das oder die zulegierten Elemente aus der Gruppe Nb, V, Ti jeweils einen Gehalt von mindestens 0,005 Gewichtsprozent auf.

Besonders vorteilhaft ist, dass die Summe seiner Ti- und Mo- Gehalte > 0,1 Gewichtsprozent beträgt.

Da das schmelztauchbeschichtete Warmband eine Zugfestigkeit Rm von 780 bis 980 MPa und eine Streckgrenze ReH von mindestens 680 MPa aufweist, können Bauteile, insbesondere eines Kraftfahrzeugs mit geringen Wanddicken und hoher Stabilität gefertigt werden. Die Werte für die Zugversuche gelten für Querproben.

Eine für das schmelztauchbeschichtete Warmband ermittelte Bruchdehnung A nach DIN EN ISO 6892-1:2009 von mindestens 10% bei Nenndicken von 1,80 bis 3,00 mm bzw. von mindestens 12 % bei Nenndicken von 3,01 bis 3,50 ermöglicht eine hervorragende Kaltverformbarkeit der Bauteile, insbesondere eines Kraftfahrzeugs. Für die Untersuchungen wurden gemäß DIN 50 125 bei einer Nenndicke kleiner 3 mm der Probekörper A80 und bei einer Nenndicke größer gleich 3 mm der Probekörper A5 verwendet.

Erfindungsgemäß ergibt sich ein Warmband aus einem bainitischen Mehrphasenstahl mit einer Zn-Mg-Al-Beschichtung, insbesondere hergestellt nach einen Verfahren nach einem der Ansprüche 1 bis 5, erschmolzen aus einer Stahlschmelze bestehend aus (in Gewichtprozent) C: 0,04 - 0,11, Si: <= 0,7, Mn: 1,4 - 2,2, Mo: 0,05 - 0,5, Al: 0,015 - 0,1, P: bis zu 0,02, S: bis zu 0,01, B bis zu 0,006, sowie mindestens ein Element aus der Gruppe Nb, V, Ti gemäß folgender Bedingung: 0,02 <= Nb + V + Ti <= 0,20, optional in Summe Ti- und Mo-Gehalt > 0,1 und Rest Eisen einschließlich unvermeidbarer erschmelzungsbedingter, stahlbegleitender Elemente, schmelztauchbeschichtet in einem Zink-Legierungsschmelzbad enthaltend (in Gewichtsprozent) Al: 1,3 - 1,7, Mg: 1,0 - 1,2, Rest Zink und unvermeidbare Verunreinigungen, wobei das Gefüge des Warmbandes nach dem Warmwalzen einen Bainit-Anteil größer als 50% aufweist. Das beschichtete und bainitische Warmband zeichnet sich durch eine optimierte Kombination aus hoher Festigkeit, hervorragender Verformbarkeit und gutem Korrosionsschutz aus. Aufgrund der chemischen Zusammensetzung des Trägermaterials in Form des bainitischen Mehrphasenstahls und der Zn-Mg-Al-Beschichtung ist zudem eine gute Schweißbarkeit gegeben. Das Zink-Legierungsschmelzbad weist neben Zn, Mg und Al unvermeidbare Verunreinigungen auf, die üblicher Weise Y, Ca, Ce, La, Ti, B als Spurenelemente in einer Größenordnung in Summe von weniger als 0,3 Gew.-%.

Die Entwicklung des vorbeschriebenen Verfahrens und des beschichteten, bainitischen Warmbandes geht zurück auf theoretische Betrachtungen, Simulationen und Umsetzung in praktischen Versuchen (Versuchsschmelzen, Probecoils).

Das insbesondere nach dem Verfahren hergestellte beschichtete Warmband eignet sich besonders zur Herstellung von umgeformten, dynamisch hoch belastbaren und gegen korrosive und abrasive Einwirkungen widerstandfähigen Bauteilen, insbesondere Kraftfahrzeugteilen, insbesondere mit komplexen Bauteilgeometrien, wie beispielsweise Achsbauteile, Federbeine, Querlenker, Fahrwerkslenker, Rahmen von Batterien für Elektro-Autos oder Schottplatten. Hierfür wird das beschichtete Warmband direkt weiter verarbeitet oder zu einem geschweißten Rohr geformt und dann weiter verarbeitet. Bei derartigen Bauteilen können die typischen Eigenschaften des beschichteten Warmbandes wie das hohe Festigkeitspotential, die gute Verformbarkeit und dem gutem Korrosionsschutz einhergehend mit einer Gewichtseinsparung am Bauteil Anwendung finden sind. Aufgrund der guten Verformbarkeit lassen sich aus dem beschichteten Warmband komplexe kaltumgeformte Bauteile unter Vermeidung von Schweißnähten herstellen. Die Zn-Mg-Al-Beschichtung bietet einen kathodischen Korrosionsschutz am fertiggestellten Kraftfahrzeug, der zusätzlich zur Barriereschutzwirkung der Tauchlackierung einen aktiven Korrosionsschutz mit Fernwirkung bietet.

Übliche Abmessungen für ein entsprechendes Warmband sind in etwa: Dicke in mm: 1,40 bis 3,50, Breite in mm: 900 bis 1.250.

Als vorteilhaft erweist sich die Zn-Mg-Al-Beschichtung zum Einsatz auf Warmband mit einer Dicke größer als 1,6 mm und im Besonderen hochfestem und noch dickerem Warmband. Die bei der Umformung auftretenden großen Kräfte führen bei bekannten Zn-Beschichtungen zu entsprechendem Zn-Abrieb im Werkzeug, der mehrfaches Reinigen und zugehörige Fertigungsunterbrechungen erforderlich macht. Grund sind die großen Scherkräfte innerhalb der Beschichtung, die sich beim Durchlaufen des Niederhalters ausbilden. Die Zn-Mg-Al-Beschichtung enthält unterschiedlich feste Phasenanteile, die die auftretenden Scherkräfte ertragen können. Es kommt zu deutlich weniger bis keinem Abrieb. Damit ist eine wirtschaftlichere Fertigung möglich.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente näher eingegangen werden.

Kohlenstoff (C) gilt als das wichtigste Legierungselement im Stahl. Durch eine Einstellung eines Kohlenstoffgehalts auf maximal 2,0 Gewichtsprozent wird das Eisen erst zum Stahl. Trotz dieser Tatsache wird während der Stahlherstellung der Kohlenstoffanteil drastisch abgesenkt. Kohlenstoff wird aufgrund seines kleinen Atomradius interstitiell im Eisengitter gelöst. Die Löslichkeit ist dabei im α-Eisen maximal 0,02 Gewichtsprozent und im β-Eisen maximal 2,06 Gewichtsprozent. Kohlenstoff steigert in gelöster Form die Härtbarkeit von Stahl erheblich. Durch die hervorgerufenen Gitterverspannungen im gelösten Zustand werden Diffusionsvorgänge behindert und somit Umwandlungsvorgänge verzögert. Zudem begünstigt Kohlenstoff die Bildung von Austenit, erweitert also das Austenitgebiet zu niedrigeren Temperaturen. Mit steigendem zwangsgelösten Kohlenstoffgehalt steigen die Gitterverzerrungen und damit die Festigkeitswerte des Martensits. Kohlenstoff ist zudem erforderlich, um Carbide zu bilden. Ein nahezu in jedem Stahl vorkommender Vertreter ist der Zementit (Fe3C). Es können sich jedoch auch wesentlich härtere Sondercarbide mit anderen Metallen wie zum Beispiel Chrom, Titan, Niob, Vanadium bilden. Dabei ist nicht nur die Art sondern auch die Verteilung und Größe der Ausscheidungen von entscheidender Bedeutung für die resultierende Festigkeitssteigerung. Um einerseits eine ausreichende Festigkeit und andererseits eine gute Schweißbarkeit sicherzustellen, werden deshalb der minimale C-Gehalt auf 0,04 Gewichtsprozent und der maximale C-Gehalt auf 0,11 Gewichtsprozent festgelegt. Bevorzugt wird der minimale C-Gehalt auf 0,06 Gewichtsprozent und der maximale C-Gehalt auf 0,10 Gewichtsprozent festgelegt.

Silizium (Si) bindet beim Vergießen Sauerstoff und vermindert somit Seigerungen sowie Verunreinigungen im Stahl. Zudem erhöht Silizium durch Mischkristallverfestigung die Festigkeit und das Streckgrenzenverhältnis des Ferrits bei nur geringfügig absinkender Bruchdehnung. Ein weiterer wichtiger Effekt ist, dass Silizium die Bildung von Ferrit zu kürzeren Zeiten verschiebt und somit die Entstehung von ausreichend Ferrit vor der Abschreckung ermöglicht. Durch die Ferritbildung wird der Austenit mit Kohlenstoff angereichert und stabilisiert. Zusätzlich stabilisiert Silizium im unteren Temperaturbereich speziell im Bereich der Bainitbildung durch Verhinderung von Carbidbildung den Austenit (keine Verarmung an Kohlenstoff). Zudem kann sich bei hohen Siliziumgehalten während des Warmwalzens stark haftender Zunder bilden, der die Weiterverarbeitung beeinträchtigen kann. Beim kontinuierlichen Verzinken kann Silizium während des Glühens an die Oberfläche diffundieren und dort Siliziumoxide bilden. Während der Eintauchphase im Zinkbad können Siliziumoxide die Ausbildung einer geschlossenen Haftschicht zwischen Stahl und Zink stören, da sie eine Benetzung der Stahloberfläche verhindern. Dadurch wird die Bildung einer haftvermittelnden Hemmschicht gestört. Dies äußert sich in einer schlechten Zinkhaftung und unverzinkten Stellen. Aus den vorgenannten Gründen wird der maximale Silizium-Gehalt auf 0,50 Gewichtsprozent festgelegt. Bevorzugt wird der minimale Si-Gehalt auf 0,05 Gewichtsprozent und der maximale Si-Gehalt auf 0,50 Gewichtsprozent festgelegt.

Mangan (Mn) wird fast allen Stählen zur Entschwefelung zugegeben, um den schädlichen Schwefel in Mangansulfide zu überführen. Zudem erhöht Mangan durch Mischkristallverfestigung die Festigkeit des Ferrits und verschiebt die α-/β-Umwandlung zu niedrigeren Temperaturen. Ein Hauptgrund für das Zulegieren von Mangan in Mehrphasenstählen ist die deutliche Verbesserung der Einhärtbarkeit. Aufgrund der Diffusionsbehinderung wird die Perlit- und Bainitumwandlung zu längeren Zeiten verschoben und die Martensitstarttemperatur gesenkt. Mangan kann, analog zum Silizium, bei hohen Konzentrationen an der Oberfläche zu Manganoxiden führen, die das Zinkhaftungsverhalten und das Oberflächenaussehen negativ beeinflussen können. Der Mangan-Gehalt wird deshalb auf 1,40 bis 2,20 Gewichtsprozent festgelegt. Die Eckwerte sind hierbei mitumfasst.

Phosphor (P) ist ein Spurenelement aus dem Eisenerz und wird im Eisengitter als Substitutionsatom gelöst. Phosphor steigert durch Mischkristallverfestigung die Härte und verbessert die Härtbarkeit. Es wird allerdings in der Regel versucht, den Phosphorgehalt soweit wie möglich abzusenken, da er unter anderem durch seine geringe Diffusionsgeschwindigkeit stark seigerungsanfällig ist und im hohen Maße die Zähigkeit vermindert. Durch die Anlagerung von Phosphor an den Korngrenzen treten in der Regel Korngrenzenbrüche auf. Zudem setzt Phosphor die Übergangstemperatur von zähem zu sprödem Verhalten bis zu 300 °C herauf. Während des Warmwalzens können oberflächennahe Phosphoroxide an den Korngrenzen zu Bruchaufreißungen führen. In einigen Stählen wird er allerdings aufgrund der niedrigen Kosten und der hohen Festigkeitssteigerung in geringen Mengen (< 0,1 %) als Mikrolegierungselement eingesetzt. So wird auch in Mehrphasenstählen Phosphor teilweise als Festigkeitsträger eingesetzt. Aus vorgenannten Gründen ist der Phosphorgehalt auf 0,02 Gewichtsprozent begrenzt.

Schwefel (S) ist wie Phosphor als Spurenelement im Eisenerz gebunden. Er ist im Stahl im allgemeinen unerwünscht, da er zu starker Seigerung neigt und stark versprödend wirkt. Es wird deshalb versucht, möglichst geringe Mengen an Schwefel in der Schmelze zu erreichen (z. B. durch eine Tiefvakuumbehandlung). Des Weiteren wird der vorhandene Schwefel durch Zugabe von Mangan in die relativ ungefährliche Verbindung Mangansulfid (MnS) überführt. Die Mangansulfide werden während des Walzprozesses oft zeilenartig ausgewalzt und fungieren als Keimsteilen für die Umwandlung. Dies führt vor allem bei diffusionsgesteuerter Umwandlung zu einem zeilig ausgeprägten Gefüge und kann bei stark ausgeprägter Zeiligkeit zu verschlechterten mechanischen Eigenschaften führen (z. B. ausgeprägte Martensitzeilen statt verteilte Martensitinseln, kein isotropes Werkstoffverhalten, verminderte Bruchdehnung). Aus vorgenannten Gründen ist der Schwefelgehalt auf 0,01 Gewichtsprozent begrenzt.

Aluminium (Al) wird in der Regel dem Stahl zulegiert, um den im Eisen gelösten Sauerstoff und Stickstoff zu binden. Der Sauerstoff und Stickstoff werden so in Aluminiumoxide und Aluminiumnitride überführt. Diese Ausscheidungen können über eine Erhöhung der Keimsteilen eine Kornfeinung bewirken und so die Zähigkeitseigenschatten sowie Festigkeitswerte steigern. Aluminiumnitrid wird nicht ausgeschieden, wenn Titan in ausreichenden Mengen vorhanden ist. Titannitride haben eine geringere Bildungsenthalpie und werden deshalb bei höheren Temperaturen gebildet. In gelöstem Zustand verschiebt Aluminium wie das Silizium die Ferritbildung zu kürzeren Zeiten und ermöglicht so die Bildung von ausreichend Ferrit im MehrphasenstahL Es unterdrückt zudem die Carbidbildung und führt so zu einer Stabilisierung des Austenits. Der Al-Gehalt wir deshalb auf 0,015 bis maximal 0,10 Gewichtsprozent begrenzt.

Bor (B) bildet mit Stickstoff wie auch mit Kohlenstoff Nitride beziehungsweise Carbide; in der Regel wird dies jedoch nicht angestrebt. Zum Einen bildet sich durch die geringe Löslichkeit nur eine kleine Menge an Ausscheidungen und zum Anderen werden diese zumeist an den Korngrenzen ausgeschieden. Bor führt im gelösten Zustand in sehr geringen Mengen zu einer deutlichen Verbesserung der Einhärtbarkeit. Der Wirkmechanismus von Bor ist nicht abschließend geklärt. Hypothetisch kann davon ausgegangen werden, dass sich Bor-Atome bevorzugt an den Austenit-Korngrenzen anlagern und dort die Ferrit-Bildung beim Abkühlen aus dem Austenit-Gebiet massiv verzögern. Dadurch wird die Bainit-Bildung gefördert. Die Wirksamkeit von Bor wird mit steigender Korngröße und steigendem Kohlenstoffgehalt (> 0, 8 Gewichtsprozent) herabgesetzt. Eine Menge über 60 ppm verursacht zudem eine sinkende Härtbarkeit, da Borcarbide auf den Korngrenzen als Keime fungieren. Bor hat eine sehr hohe Affinität zu Sauerstoff, was zu einem Herabsetzen des Borgehaltes in Bereichen nahe der Oberfläche (bis zu 0,5 mm) führen kann. In diesem Zusammenhang wird von einer Glühung bei über 1000 °C abgeraten. Dies ist zudem zu empfehlen, da Bor bei Glühtemperaturen über 1000 °C zu einer starken Grobkornbildung führen kann. Aus vorgenannten Gründen wird der B-Gehalt auf einen Wert von bis zu 0,006% begrenzt.

Titan (Ti) bildet schon bei hohen Temperaturen sehr stabile Nitride (TiN) und Sulfide (TiS₂). Diese lösen sich in Abhängigkeit des Stickstoffgehaltes zum Teil erst in der Schmelze auf. Wenn die so entstandenen Ausscheidungen nicht mit der Schlacke entfernt werden, bilden sie im Werkstoff durch die hohe Entstehungstemperatur recht grobe Partikel aus und sind in der Regel nicht förderlich für die mechanischen Eigenschaften. Ein positiver Effekt auf die Zähigkeit entsteht durch die Abbindung des freien Stickstoffes und Sauerstoffs. So schützt Titan andere Mikrolegierungselemente wie Niob vor der Abbindung durch Stickstoff. Diese können ihre Wirkung dann optimal entfalten. Nitride, die durch das Absinken des Sauerstoff- und Stickstoffgehalts erst bei tieferen Temperaturen entstehen, können zudem eine effektive Behinderung des Austenitkornwachstums bewirken. Nicht abgebundenes Titan formt bei Temperaturen ab 1150°C Titancarbide und kann so eine Kornverfeinerung (Hemmung des Austenitkornwachstums, Kornverfeinerung durch verzögerte Rekristallisation und/oder Erhöhung der Keimzahl bei α/β-Umwandlung) sowie eine Ausscheidungshärtung bewirken. Titan wird daher optional nach der Bedingung 0,02 <= Nb + V + Ti <= 0,20 Gewichtsprozent zulegiert. Bevorzugt wird Titan nach der Bedingung 0,05 Gewichtsprozent <= Nb + V + Ti <= 0,20 Gewichtsprozent zulegiert. Besonders vorteilhaft ist vorgesehen, dass die Summe Ti + Mo > 0,1 Gewichtsprozent ist. Wenn Titan als Legierungselement gewählt wird, beträgt der Ti-Gehalt mindestens 0,005 Gewichtsprozent unter Beachtung der vorgenannten Summenbedingung.

Niob (Nb) bewirkt eine starke Kornfeinung, da es am effektivsten von allen Mikrolegierungselementen eine Verzögerung der Rekristallisation bewirkt und zudem das Austenitkornwachstum hemmt. Die festigkeitssteigernde Wirkung ist qualitativ aber durch den erhöhten Kornfeinungseffekt und die größere Menge an festigkeitssteigernden Teilchen (Abbindung des Titans zu TiN bei hohen Temperaturen) höher als die von Titan einzuschätzen. Niobcarbide bilden sich ab etwa 1200°C. In Verbindung mit Titan, das wie bereits beschrieben den Stickstoff abbindet, kann Niob durch Carbidbildung im unteren Temperaturbereich (kleinere Carbidgrößen) seine festigkeitssteigernde Wirkung erhöhen. Ein weiterer Effekt des Niobs ist die Verzögerung der α/β-Umwandlung und das Herabsenken der Martensitstarttemperatur im gelösten Zustand. Zum Einen geschieht dies durch den Solute-Drag-Effekt und zum Anderen durch die Kornfeinung. Diese bewirkt eine Festigkeitssteigerung des Gefüges und somit auch einen höheren Widerstand gegen die Ausdehnung bei der Martensitbildung. Begrenzt ist der Einsatz von Niob durch die recht geringe Löslichkeitsgrenze. Diese begrenzt zwar die Menge an Ausscheidungen bewirkt aber vor allem eine frühe Ausscheidungsbildung mit recht groben Partikeln. Die Ausscheidungshärtung kann somit vor allem bei Stählen mit geringem C-Gehalt (größere Übersättigung möglich) und bei Warmumformprozessen (verformungsinduzierte Ausscheidung) effektiv wirksam werden. Niob wird daher optional nach der Bedingung 0,02 <= Nb + V + Ti <= 0,20 Gewichtsprozent zulegiert. Bevorzugt wird Niob nach der Bedingung 0,05 Gewichtsprozent <= Nb + V + Ti <= 0,20 Gewichtsprozent zulegiert. Wenn Niob als Legierungselement gewählt wird, beträgt der Nb-Gehalt mindestens 0,005 Gewichtsprozent unter Beachtung der vorgenannten Summenbedingung.

Die Carbid- und auch die Nitridbildung von Vanadium (V) setzt erst ab Temperaturen um 1000 °C beziehungsweise noch nach der α/β-Umwandlung ein, also wesentlich später als bei Titan und Niob. Vanadium hat somit durch die geringe Anzahl der im Austenit vorhandenen Ausscheidungen kaum eine kornverfeinernde Wirkung. Auch das Austenitkornwachstum wird durch die erst späte Ausscheidung der Vanadiumcarbide nicht gehemmt. Somit beruht die festigkeitssteigernde Wirkung fast allein auf der Ausscheidungshärtung. Ein Vorteil des Vanadiums ist die hohe Löslichkeit im Austenit und der durch die tiefe Ausscheidungstemperatur verursachte große Volumenanteil an feinen Ausscheidungen. Vanadium wird daher optional nach der Bedingung 0,02 <= Nb + V + Ti <= 0,20 Gewichtsprozent zulegiert. Bevorzugt wird Vanadium nach der Bedingung 0,05 Gewichtsprozent <= Nb + V + Ti <= 0,20 Gewichtsprozent zulegiert. Wenn Vanadium als Legierungselement gewählt wird, beträgt der V-Gehalt mindestens 0,005 Gewichtsprozent unter Beachtung der vorgenannten Summenbedingung.

Die Zugabe von Molybdän (Mo) erfolgt ähnlich wie bei Chrom zur Verbesserung der Härtbarkeit. Die Perlit- und Bainitumwandlung wird zu längeren Zeiten geschoben und die Martensitstarttemperatur gesenkt. Molybdän erhöht zudem die Anlassbeständigkeit erheblich, so dass im Zinkbad keine Festigkeitsverluste zu erwarten sind und bewirkt durch Mischkristallverfestigung eine Festigkeitssteigerung des Ferrits. Der Mo-Gehalt wird in Abhängigkeit von der Abmessung, der Anlagenkonfiguration und der Gefügeeinstellung optional zulegiert, wobei dann die Mindestzugabe 0,050 Gewichtsprozent sein sollte, um eine Wirkung zu erzielen. Aus Kostengründen wird der Mo-Gehalt auf max. 0,50 Gewichtsprozent festgelegt. Besonders vorteilhaft ist vorgesehen, dass die Summe Ti + Mo > 0,1 Gewichtsprozent ist.

Die Beschichtung besteht aus einer zinkbasierten Legierung mit geringen Anteilen von Magnesium und Aluminium, die in einem Schmelztauchverfahren auf ein Stahlflachprodukt aufgebracht wird. Hierbei weist das flüssige Metallbad mit der Zn-Mg-Al-Schmelze etwa eine Temperatur im Bereich von 405 bis 470 °C, insbesondere etwa 410 bis 430 °C, auf. Die gewünschte Schichtdicke wird in üblicher Weise über Abstreifdüsen eingestellt, wenn das beschichtete Flachprodukt aus dem Metallbad austritt. Derartige Zn-Mg-Al-Beschichtungen zeichnen sich durch eine vergleichsweise bessere Korrosionsschutzwirkung bei geringerer Schichtdicke als bei reinen Zinkbeschichtungen auf. Durch entsprechender Materialeinsparung führt das zu geringerem Gewicht und einem dünneren Endprodukt. Bei gleichbleibender Schichtdicke wird ein erhöhter Korrosionsschutz erreicht. Die Legierung mit Magnesium und Aluminium beeinflusst die Korrosionsschutzwirkung nachhaltig positiv. Auch ist es möglich, eine Zn-Mg-Al-Schmelze vorzusehen, wobei der Magnesiumanteil geringer als der Aluminiumanteil ist. Der Magnesiumanteil liegt im Bereich von 1,0 bis 1,2 Gewichtsprozent, und der Aluminiumanteil im Bereich von 1,3 bis 1,7 Gewichtsprozent. Hierbei sind die Anteile in Gewichtsprozent von Zink, Magnesium und Aluminium so gewählt, dass eine zweistufige Erstarrung der Schmelze erreicht wird. In einem ersten Erstarrungsschritt entstehen Zink-Primärkristalle und in einem zweiten Erstarrungsschritt bildet sich ein feinkörniges ternäres Zn-Al-Mg-Eutektikum. Eine Bildung eines binären Zn-Mg-Eutektikums und einer aluminiumreichen Phase, wie es üblicher Weise bei einer dreistufigen Erstarrung entsteht, wird weitestgehend vermieden. Mit einem steigenden Legierungsanteil von Mg und Al unter Beibehaltung der Verhältnisse der Gewichtsprozente zueinander bleibt es bei dem zweistufigen Erstarrungspfad und es kommt zu einer Abnahme des sich bildenden Anteils von Primärzink. Bei einem Magnesiumanteil von 1,0 Gewichtsprozent und einen Aluminiumanteil von 1,5 Gewichtsprozent bildet sich in etwa 95 % Primärzink in der Beschichtung. Ein Magnesiumanteil von 1,2 Gewichtsprozent und einen Aluminiumanteil von 1,8 Gewichtsprozent führt zu einer Abnahme von Primärzink in der Beschichtung auf 75 %. Der zweistufige Erstarrungspfad führt gegenüber einem dreistufigen Erstarrungspfad zu einer Beschichtung mit einem homogeneren Oberflächenbild. Mikrofalten an der Oberfläche werden auch vermieden. Die Beschichtung bildet eine Oxidhaut mit MgO, Al₂O₃ und MgAl₂O₄ aus. Die Zn-Al-Mg-Beschichtung bietet einen herausragenden Korrosionsschutz bei gleichbleibenden und kleineren Schichtauflagen als bei einer Standardfeuerzinkbeschichtung. Salzsprühtests zeigen dabei eine zwei- bis sechsmal höhere Korrosionsbeständigkeit als übliche Standardfeuerzinkbeschichtung. Gleichzeitig überzeugt die Zn-Al-Mg-Beschichtung durch ausgezeichnete Lackhaftung. Eine Phosphatierung als anorganische Konversionsschicht auf der metallischen Oberfläche der Zn-Al-Mg-Beschichtung trägt entscheidend zur Qualität der folgenden Lackierung bei. Die Zn-Al-Mg-Beschichtung ist automobiltypisch phosphatierbar. Das Lackierverhalten ist identisch zur feuerverzinkten Oberfläche oder elektrolytisch verzinkten Oberfläche. Durch den besonderen Widerstand gegen Korrosion, auch nach der Verarbeitung, bietet die Zn-Al-Mg-Beschichtung einen verbesserten Schnittkantenschutz. Auch werden durch die Erzielung geringerer Schichtauflagen die Ressourcen durch Einsparung von Zink geschont. Die Reibwerte der Beschichtung beeinflussen maßgeblich das Umformverhalten der herzustellenden Bauteile. Der Reibwert bei einstufigen Umformprozessen ist vergleichbar mit der feuerverzinkten Oberfläche oder mit der elektrolytisch verzinkten Oberfläche. Bei mehrstufigen Umformprozessen tritt keine Kaltverschweißung im Gegensatz zu standardfeuerverzinktem oder elektrolytisch verzinktem Material auf. Das mit Zn-Al-Mg-Beschichtung versehene Flachprodukt ist wie ein feuerverzinktes Flachprodukt über Widerstandspunktschweißen oder Laserstrahlschweißen fügbar. Vorstehend ist das Verfahren und das Produkt in Bezug auf ein beschichtetes, bainitisches Warmband beschrieben. Entsprechendes soll auch für entsprechend beschichtete Bleche gelten.

## Patentansprüche

1. Verfahren zur Herstellung eines Warmbandes aus einem bainitischen Mehrphasenstahl mit einer Zn-Mg-Al-Beschichtung, umfassend die Schritte:
- Erschmelzen einer Stahlschmelze bestehend aus in Gewichtsprozent
C: 0,04 - 0,11
Si: <= 0,7
Mn: 1,4 - 2,2
Mo: 0,05 - 0,5
Al: 0,015 - 0,1
P: bis zu 0,02
S: bis zu 0,01
B: bis zu 0,006
sowie mindestens ein Element aus der Gruppe Nb, V, Ti gemäß folgender Bedingung: 0,02 <= Nb + V + Ti <= 0,20 und
optional in Summe Ti- und Mo-Gehalt > 0,1
Rest Eisen einschließlich unvermeidbarer erschmelzungsbedingter, stahlbegleitender Elemente,
- Vergießen der Stahlschmelze zu einem Vormaterial, insbesondere einer Bramme oder einem Block oder einer Dünnbramme,
- Warmwalzen des Vormaterials zu einem Warmband mit einer Endwalztemperatur im Bereich von 800 bis 950 °C,
- Abkühlen des Warmbandes auf eine Haspeltemperatur kleiner 650 °C,
- Aufhaspeln des Warmbandes bei einer Haspeltemperatur kleiner 650 °C,
- Abkühlen des aufgehaspelten Warmbandes auf Raumtemperatur an ruhender Luft, wobei das Gefüge des aufgehaspelten Warmbandes nach dem Warmwalzen anschließend einen Bainit-Anteil größer als 50% aufweist,
- Erwärmen des Warmbandes auf eine Temperatur von größer als 650 °C und kleiner als Ac3, insbesondere kleiner als Ac1 + 50 °C,
- Abkühlen des Warmbandes auf Zinkbadtemperatur,
- Schmelztauchbeschichten des erwärmten Warmbandes in einem Zink-Legierungsschmelzbad enthaltend in Gewichtsprozent
Al: 1,3 - 1,7
Mg: 1,0 - 1,2
Rest Zink und unvermeidbare Verunreinigungen.

2. Verfahren nach Anspruch 1, **dadurch gekennzeichnet, dass** das Glühen und Erhitzen des Warmbandes bei einer Temperatur von größer als 650 °C und kleiner als Ac3, insbesondere kleiner als Ac1 + 50 °C, in einem Arbeitsschritt stattfindet und das Warmband unmittelbar nach dem Erhitzen und Abkühlen auf Zinkbadtemperatur schmelztauchbeschichtet wird.

3. Verfahren nach Anspruch 1 oder 2, **dadurch gekennzeichnet, dass** das Warmband in einem Zink-Legierungsschmelzbad mit einer Badtemperatur von 405 bis 470 °C, bevorzugt 410 bis 430 °C, schmelztauchbeschichtet wird.

4. Verfahren nach einem der Ansprüche 1 bis 3, **dadurch gekennzeichnet, dass** der zu erschmelzende Stahl einen C-Gehalt von 0,06 bis 0,10 Gewichtsprozent, einen Si-Gehalt von 0,05 bis 0,50 Gewichtsprozent aufweist, wobei die Summe der Gehalte Nb + V + Ti in einem Bereich von 0,05 bis 0,20 Gewichtsprozent liegt.

5. Verfahren nach einem der Ansprüche 1 bis 4, **dadurch gekennzeichnet, dass** der zu erschmelzende Stahl bezogen auf das oder die zulegierten Elemente aus der Gruppe Nb, V, Ti jeweils einen Gehalt von mindestens 0,005 Gewichtsprozent aufweist.

6. Warmband aus einem bainitischen Mehrphasenstahl mit einer Zn-Mg-Al-Beschichtung, insbesondere hergestellt nach einem Verfahren nach einem der Ansprüche 1 bis 5, erschmolzen aus einer Stahlschmelze bestehend aus in Gewichtsprozent
C: 0,04 - 0,11
Si: <= 0,7
Mn: 1,4 - 2,2
Mo: 0,05 - 0,5
Al: 0,015 - 0,1
P: bis zu 0,02
S: bis zu 0,01
B: bis zu 0,006
sowie mindestens ein Element aus der Gruppe Nb, V, Ti gemäß folgender Bedingung: 0,02 <= Nb + V + Ti <= 0,20 sowie
optional in Summe Ti- und Mo-Gehalt > 0,1 und
Rest Eisen einschließlich unvermeidbarer erschmelzungsbedingter, stahlbegleitender Elemente,
schmelztauchbeschichtet in einem Zink-Legierungsschmelzbad enthaltend in Gewichtsprozent
Al: 1,3 - 1,7
Mg: 1,0 - 1,2
Rest Zink und unvermeidbare Verunreinigungen,
wobei das Gefüge des Warmbandes nach dem Warmwalzen einen Bainit-Anteil größer als 50% aufweist.

7. Warmband nach Anspruch 6, **dadurch gekennzeichnet, dass** das Warmband eine Zugfestigkeit Rm von 780 bis 980 MPa aufweist.

8. Warmband nach einem der Ansprüche 6 oder 7, **dadurch gekennzeichnet, dass** das Warmband eine Streckgrenze ReH von mindestens 680 MPa aufweist.

9. Warmband nach einem der Ansprüche 6 bis 8, **dadurch gekennzeichnet, dass** das Warmband eine Bruchdehnung A nach DIN EN ISO 6892-1:2009 von mindestens 10% aufweist.

10. Verwendung eines beschichteten Warmbandes nach mindestens einem der Ansprüche 6 bis 9 zur Herstellung von umgeformten, dynamisch hoch belastbaren und gegen korrosive und abrasive Einwirkungen widerstandfähigen Bauteilen, insbesondere Kraftfahrzeugteilen, insbesondere mit komplexen Bauteilgeometrien, wie beispielsweise Federbeine oder Fahrwerkslenker.

## Claims

1. Method for producing a hot strip of a bainitic multi-phase steel having a Zn-Mg-Al coating, comprising the steps of:
- melting a steel melt consisting in weight percent of
C: 0.04 - 0.11
Si: <= 0.7
Mn: 1.4 - 2.2
Mo: 0.05 - 0.5
Al: 0.015 - 0.1
P: up to 0.02
S: up to 0.01
B: up to 0.006
and at least one element from the group Nb, V, Ti according to the following condition: 0.02 <= Nb + V + Ti <= 0.20 and
optionally in total the Ti and Mo content > 0.1
with the remainder being iron including unavoidable melting-induced, steel accompanying elements,
- casting the steel melt to form a precursor material, in particular a slab or a block or a thin slab,
- hot roiling the precursor material to form a hot strip having an end rolling temper ture in a range of 800 to 950°C,
- cooling the hot strip to a reeling temperature of less than 650°C,
- reeling the hot strip at a reeling temperature of less than 650°C,
- cooling the reeled hot strip to room temperature in stationary air, wherein the microstructure of the reeled hot strip after hot rolling then has a bainite content of greater than 50%,
- heating the hot strip to a temperature of greater than 650°C and less than Ac3, in particular less than Ac1 + 50°C,
- cooling the hot strip to zinc bath temperature,
- hot-dip coating the heated hot strip in a zinc alloy melt bath containing in weight percent
Al: 1.3 - 1.7
Mg: 1.0 - 1.2
with the remainder being zinc and unavoidable impurities.

2. Method as claimed in claim 1, **characterised in that** annealing and heating the hot strip at a temperature of greater than 650°C and less than Ac3, in particular less than Ac1 + 50°C, take place in one working step and the hot strip is hot-dip coated immediately after the heating and cooling to zinc bath temperature.

3. Method as claimed in claim 1 or 2, **characterised in that** the hot strip is hot-dip coated in a zinc alloy melt bath at a bath temperature of 405 to 470°C, preferably 410 to 430°C.

4. Method as claimed in any one of claims 1 to 3, **characterised in that** the steel to be melted has a C content of 0.06 to 0.10 weight percent, a Si content of 0.05 to 0.50 weight percent, wherein the total of the contents of Nb + V + Ti is in a range of 0.05 to 0.20 weight percent.

5. Method as claimed in any one of claims 1 to 4, **characterised in that** in relation to the alloyed element(s) from the group Nb, V, Ti, the steel to be melted has a content in each case of at least 0.005 weight percent.

6. Hot strip of a bainitic multi-phase steel having a Zn-Mg-Al coating, in particular produced according to a method as claimed in any one of claims 1 to 5, melted from a steel melt consisting in weight percent of
C: 0.04 - 0.11
Si: <= 0.7
Mn: 1.4 - 2.2
Mo: 0.05 - 0.5
Al: 0.015 - 0.1
P: up to 0.02
S: up to 0.01
B: up to 0.006
and at least one element from the group Nb, V, Ti according to the following condition: 0.02 <= Nb + V + Ti <= 0.20 and
optionally in total the Ti and Mo content > 0.1 and
with the remainder being iron including unavoidable melting-induced, steel accompanying elements,
hot-dip coated in a zinc alloy melt bath containing in weight percent
Al: 1.3 - 1.7
Mg: 1.0 - 1.2
with the remainder being zinc and unavoidable impurities,
wherein the microstructure of the hot strip after hot rolling having a bainite content of greater than 50%.

7. Hot strip as claimed in claim 6, **characterised in that** the hot strip has a tensile strength Rm of 780 to 980 MPa.

8. Hot strip as claimed in any one of claims 6 or 7, **characterised in that** the hot strip has a yield strength ReH of at least 680 MPa.

9. Hot strip as claimed in any one of claims 6 to 8, **characterised in that** the hot strip has an elongation at fracture A pursuant to DIN EN ISO 6892-1:2009 of at least 10%.

10. Use of a coated hot strip as claimed in at least one of claims 6 to 9 for production of deformed components which can be subjected to high dynamic loading and are resistant to corrosive and abrasive effects, in particular motor vehicle parts, in particular with complex component geometries, such as spring struts or undercarriage connecting rods.

## Revendications

1. Procédé de fabrication d'une bande chaude à partir d'un acier polyphasique bainitique pourvue d'un revêtement en Zn-Mg-Al, le procédé comprenant les étapes suivantes:
- faire fondre de l'acier comprenant en pourcentage en poids
C: 0,04 à 0,11
Si: <= 0,7
Mn: 1,4 à 2,2
Mo: 0,05 à 0,5
Al: 0,015 à 0,1
P: jusqu'à 0,02
S: jusqu'à 0,01
B: jusqu'à 0,006
et au moins un élément du groupe Nb, V, Ti selon la condition suivante:
0,02 <= Nb + V + Ti <= 0,20 et
éventuellement la teneur totale en Ti et Mo > 0,1
le reste étant du Fer incluant des éléments inévitables accompagnant l'acier et liés à la fusion et,
- couler de l'acier fondu pour obtenir un matériau de départ, notamment une brame ou un lingot ou une brame mince,
- laminer à chaud le matériau de départ pour obtenir une bande chaude ayant une température de laminage finale dans la gamme de 800 à 950°C,
- refroidir la bande chaude à une température de bobinage inférieure à 650°C,
- bobiner la bande chaude à une température de bobinage inférieure à 650°C,
- refroidir la bande chaude bobinée à la température ambiante sous air calme, la structure de la bande chaude bobinée ayant alors une teneur en bainite supérieure à 50% après laminage à chaud,
- chauffer la bande chaude à une température supérieure à 650°C et inférieure à Ac3, notamment inférieure à Ac1 + 50°C,
- refroidir la bande chaude à la température du bain de zinc,
- revêtir par immersion à chaud la bande chaude chauffée dans un bain fondu d'alliage de zinc contenant en pourcentage en poids
Al: 1,3 à 1,7
Mg: 1,0 à 1,2
le reste étant du zinc et des impuretés inévitables.

2. Procédé selon la revendication 1, **caractérisé en ce que** le recuit et le chauffage de la bande chaude à une température supérieure à 650°C et inférieure à Ac3, en particulier inférieure à Ac1 + 50°C, sont effectués en une seule étape de travail et la bande chaude est revêtue par immersion à chaud immédiatement après le chauffage et le refroidissement à la température du bain de zinc.

3. Procédé selon la revendication 1 ou 2, **caractérisé en ce que** la bande chaude est revêtue par immersion à chaud dans un bain de fusion d'alliage de zinc à une température de bain de 405 à 470°C, de préférence de 410 à 430°C.

4. Procédé selon l'une quelconque des revendications 1 à 3, **caractérisé en ce que** l'acier à fondre a une teneur en C de 0,06 à 0,10 pour cent en poids, une teneur en Si de 0,05 à 0,50 pour cent en poids, la somme des teneurs en Nb + V + Ti étant dans une gamme de 0,05 à 0,20% en poids.

5. Procédé selon l'une des revendications 1 à 4, **caractérisé en ce que** l'acier à fondre a une teneur d'au moins 0,005% en poids en au moins un élément allié du groupe comprenant Nb, V, Ti.

6. Bande chaude en un acier polyphasique bainitique pourvue d'un revêtement en Zn-Mg-AI, notamment fabriquée par un procédé selon l'une des revendications 1 à 5, fondue à partir d'un acier comprenant en pourcentage en poids
C: 0,04 à 0,11
Si: <= 0,7
Mn: 1,4 à 2,2
Mo: 0,05 à 0,5
Al: 0,015 à 0,1
P: jusqu'à 0,02
S: jusqu'à 0,01
B: jusqu'à 0,006
et au moins un élément du groupe comprenant Nb, V, Ti selon la condition suivante:
0,02 <= Nb + V + Ti <= 0,20 et
éventuellement une teneur totale en Ti et Mo > 0,1 et
le reste étant du fer incluant des éléments accompagnant l'acier et inévitables liés à la fusion,
la bande étant revêtue par immersion à chaud dans un bain fondu d'alliage de zinc contenant en pourcentage en poids
Al: 1,3 à 1,7
Mg: 1,0 à 1,2
le reste étant du zinc et des impuretés inévitables,
la structure de la bande chaude ayant une teneur en bainite supérieure à 50% après laminage à chaud.

7. Bande chaude selon la revendication 6,
**caractérisée en ce que** la bande chaude a une résistance à la traction Rm de 780 à 980 MPa.

8. Bande chaude selon l'une des revendications 6 ou 7, **caractérisée en ce que** la bande chaude présente un allongement à la rupture ReH d'au moins 680 MPa.

9. Bande chaude selon l'une des revendications 6 à 8, **caractérisée en ce que** la bande chaude présente un allongement à la rupture A selon DIN EN ISO 6892-1:2009 d'au moins 10%.

10. Utilisation d'une bande chaude revêtue selon au moins l'une des revendications 6 à 9 pour la fabrication de composants mis en forme, dynamiquement très résistants et résistants aux actions corrosives et abrasives, en particulier des pièces de véhicules automobiles, ayant en particulier des géométries de composants complexes, comme par exemple des jambes de force à ressort ou des bras de mécanisme de roulement.
